Europäisches Patentamt

European Patent Office

Office européen des brevets

(11) Veröffentlichungsnummer: **0 218 739**

**A1**

(12) # EUROPÄISCHE PATENTANMELDUNG

(21) Anmeldenummer: **85113006.2**

(22) Anmeldetag: **14.10.85**

(51) Int. Cl.⁴: **G02B 6/36**

(43) Veröffentlichungstag der Anmeldung:
**22.04.87 Patentblatt  87/17**

(84) Benannte Vertragsstaaten:
**AT BE CH DE FR GB IT LI LU NL SE**

(71) Anmelder: **Schleifring und Apparatebau GmbH
Am Hardtanger 10
D-8080 Fürstenfeldbruck(DE)**

(72) Erfinder: **Mainka, Joachim
Friedrich-Ebert-Strasse 5
D-8080 Fürstenfeldbruck(DE)**

(74) Vertreter: **Patentanwälte Beetz sen. - Beetz jun. Timpe - Siegfried - Schmitt-Fumian
Steinsdorfstrasse 10
D-8000 München 22(DE)**

(54) **Optischer Drehkoppler zur Mehrkanal-Übertragung von Lichtsignalen.**

(57) Gegenstand der Erfindung ist ein optischer Drehkoppler zur Mehrkanal-Übertragung von Lichtsignalen zwischen zwei relativ zueinander um eine gemeinsame Achse rotierenden Bauteilen, denen jeweils mehrere außermittig angeordnete Lichtwellenleiter-Anschlüsse zugeordnet sind und zwischen denen ein optisches Übertragungssystem vorgesehen ist, das mindestens einen außermittig angeordneten Reflektor enthält, welcher mit einer zur Relativbewegung der beiden Bauteile proportionalen Drehzahl um die gemeinsame Achse rotiert.

Gemäß der Erfindung werden vom optischen Übertragungssystem die aus den Sender-Lichtwellenleitern (4, 5; 28, 29; 73) austretenden Lichtsignale nach radial außen umgelenkt, dort mittels des jeweiligen Reflektors (2, 3; 26, 27; 65) reflektiert und nach erneuter Umlenkung den Empfänger-Lichtwellenleitern (6, 7; 30, 31; 64) zugeführt.

FIG. 3

EP 0 218 739 A1

## Optischer Drehkoppler zur Mehrkanal-Übertragung von Lichtsignalen

Die Erfindung betrifft einen optischen Drehkoppler zur Mehrkanal-Übertragung von Lichtsignalen zwischen zwei relativ zueinander um eine gemeinsame Achse rotierenden Bauteilen, denen jeweils mehrere außermittig angeordnete Lichtwellenleiter-Anschlüsse zugeordnet sind und zwischen denen ein optisches Übertragungssystem vorgesehen ist, dessen außermittig angeordneter Reflektor mit einer zur Relativbewegung der beiden Bauteile proportionalen Drehzahl um die gemeinsame Achse rotiert.

Optische Drehkoppler zur Übertragung von Lichtsignalen zwischen zwei relativ zueinander rotierenden Bauteilen sind bereits in verschiedenen Ausführungen bekannt. So ist z. B. in der EP-OS 0065351 ein opti scher Schleifring beschrieben, der ein drehbares Ausgangsglied und ein zwischen diesem und einem stationären Eingangsglied angeordnetes optisches Übertragungselement aufweist, das mit der halben Drehzahl des Ausgangsgliedes rotiert. Das Eingangsglied enthält eine Vielzahl von gleichbeabstandeten Lichtleiteranschlüssen, denen eine entsprechende Anzahl von Lichtleiteranschlüssen im Ausgangsglied entspricht. Das mit einer der Drehzahl des rotierenden Glieds proportionalen Drehzahl umlaufende Übertragungselement weist einen ringförmigen kohärenten Streifen aus einer Vielzahl von Lichtleiterbündeln auf, die im Streifen in Umfangsrichtung gewunden verlaufen, so daß eine kontinuierliche Übertragung der Lichtsignale erfolgt, wenn das Übertragungselement mit der halben Drehzahl des Ausgangselementes rotiert. Nachteilig bei diesem optischen Schleifring ist der relativ hohe Lichtverlust bei der Übertragung, der auch bei dichtester Packung der Lichtfaserbündel unvermeidbar ist, sowie auch der außerordentlich hohe technische Herstellungsaufwand, welcher insbesondere durch die sehr genaue Verlegung der Lichtleiterbündel im Übertragungselement verursacht wird.

Weiterhin sind aus der PCT-OS WO 80/02750 optische Drehkoppler bzw. Schleifringe zur Übertragung von Lichtsignalen zwischen zwei relativ zueinander um eine gemeinsame Achse umlaufenden Bauteilen bekannt, bei dem zwischen den jeweils einem der Bauteile zugeordneten Eingangs- und Ausgangsanschlüssen von Lichtwellenlei tern ein optisches Übertragungselement angeordnet ist, das einen Reflektor in Form eines Planspiegels aufweist und mit der halben Relativgeschwindigkeit der beiden Bauteile rotiert. Bei einer Ausführung befindet sich der optische Übertragungskörper mit dem Reflektor direkt in der Drehachse, so daß die in der Praxis häufig notwendige ringförmige Anordnung der Eingangs- und Ausgangsanschlüsse beispielsweise an oder um eine zentrale Welle nicht möglich ist. Entsprechendes gilt auch für eine andere Ausführung, bei welcher der Reflektor seitlich außerhalb der Drehachse der beiden Bauteile angeordnet ist und die Eingangs- und Ausgangsanschlüsse jeweils achsparallel zueinander in einem um 45° zur Drehachse schräggestellten umlaufenden Drehkörper angeordnet sind. Auch bei dieser Ausbildung ist ein zur Durchführung einer zentralen Welle notwendiger Freiraum nicht vorhanden.

Ein konstruktiv einfacher und hinsichtlich einer Minimierung der bei der Übertragung erfolgenden Lichtverluste ist in der DE-Patentanmeldung P 34 ll l2l der Anmelderin beschrieben. Dieser Drehkoppler zur Mehrkanal-Übertragung von Lichtsignalen zwischen einem ortsfesten und einem drehangetriebenen Bauteil weist ein optisches Übertragungssystem zwischen jeweils mehreren eingangs- und ausgangsseitigen Lichtleiter-Anschlüssen auf, dessen Wendeelement ein Schmidt-Pechan-Prisma ist, das mit der halben Drehzahl des umlaufenden Bauteils angetrieben wird. Dieser funktional zuverlässige und aufgrund seines ein fachen konstruktiven Aufbaus kostengünstige Drehkoppler ist jedoch ebenfalls nicht zur Übertragung von Lichtsignalen zwischen ringförmig angeordneten Eingangs- und Ausgangsanschlüssen geeignet, da bei der Übertragung der Lichtsignale die Lichtstrahlen die optische Achse kreuzen, die gleichzeitig die Drehachse der beiden Bauteile ist.

Aufgabe der Erfindung ist es, einen optischen Drehkoppler zur Mehrkanal-Übertragung von Lichtsignalen zwischen zwei relativ zueinander um eine gemeinsame Achse rotierenden Bauteilen zu - schaffen, der bei konstruktiv einfachem und kostengünstigem Aufbau nahezu verlustlos arbeitet.

Diese Aufgabe wird erfindungsgemäß dadurch gelöst, daß das optische Übertragungssystem die aus den ringförmig angeordneten Sender-Lichtwellenleitern austretenden Lichtsignale schräg nach radial außen umlenkt, dort mittels des Reflektors nach radial einwärts reflektiert und nach erneuter Umlenkung den Empfänger-Lichtwellenleitern zuführt.

Die Ablenkung der von den ringförmig angeordneten Sender-Lichtwellenleitern ausgehenden Lichtstrahlen nach radial außen auf den drehangetriebenen Reflektor bewirkt, daß der zentrale Innenraum im Bereich der Drehachse zur Lichtsignal-Übertragung nicht benötigt wird, so daß in diesem zentralen Innenraum z. B. eine Welle oder ein anderer rotationssymmetrischer Körper angeordnet werden kann. Damit erhält der optische Dreh koppler eine mit einem elektrischen Schleifring vergleichbare Funktion.

Gemäß einer besonders zweckmäßigen Ausführungsform der Erfindung weist das optische Übertragungssystem eingangsseitig und ausgangsseitig je eine Ringlinse auf, die gemeinsam mit der halben Relativdrehzahl der beiden Bauteile synchron um die gemeinsame Drehachse rotieren. Jede dieser Ringlinsen ist in mehrere Ringsegment-Linsen unterteilt, wobei jede eingangsseitige Ringsegment-Linse in Flucht mit einer ihr zugeordneten ausgangsseitigen Ringsegment-Linse ausgerichtet ist und jede Ringsegment-Linse einen eigenen Brennpunkt auf einer äußeren Hüllfläche aufweist. Die Brennpunkte der eingangsseitigen Ringsegment-Linsen und der zu ihnen in Flucht ausgerichteten ausgangsseitigen Ringsegment-Linsen fallen in jeweils einer Stelle auf einer äußeren Hüllfläche zusammen, in welcher für jedes Paar von Ringsegment-Linsen je ein Reflektor angeordnet ist, der die Form eines zylindrischen Hohlspiegels haben kann. Zweckmäßig sind die Ringsegment-Linsen jeweils gleich ausgebildet und miteinander zur eingangsseitigen bzw. zur ausgangsseitigen Ringlinse fest verbunden. Die Form jeder Ringsegment-Linse ist so gewählt, daß ihr jeweiliger Brennpunkt in der axialen Mittelebene liegt, wobei zweckmäßig die Brennpunkte aller Ringsegment-Linsen auf einer gemeinsamen zylindrischen Hüllfläche angeordnet sind.

In besonderer Ausgestaltung der vorstehend genannten Ausführung kann jede Ringlinse durch zwei längsverlaufende optische Trennflächen in zwei sich diametral gegenüberliegende Ringsegment-Linsen unterteilt sein, deren Brennpunkte auf einer gemeinsamen zylindrischen Hüllfläche diametral gegenüberliegen.

Insbesondere für Anwendungsfälle, bei denen der zentrale freie Innenraum zur Durchführung von Wellen mit relativ großen Durchmessern entsprechend groß gewählt werden muß, sind Ausführungen des optischen Drehkopplers geeignet, bei denen die beiden Ringlinsen jeweils aus einer Vielzahl von Ringsegment-Linsen bestehen, von denen je eine eingangsseitige und ausgangsseitige Ringsegment-Linse je ein Linsenpaar bildet, in dessen gemeinsamen Brennpunkt ein hohlzylindrischer Reflektor angeordnet ist. Diese Ausführung bietet die Möglichkeit der Verwendung von im Durchmesser relativ schmaler Ringlinsen, die z. B. in einem gemeinsamen Rohrstück gleichachsig befestigt und zusammen mit diesem über ein entsprechendes Untersetzungsgetriebe mit der halben Relativdrehzahl der beiden Bauteile angetrieben werden.

In weiterer Ausgestaltung der Erfindung können die beiden Ringlinsen auch in Form eines durchgehenden längsgeteilten Zylinders ausgebildet sein, dessen beide gegenüberliegenden Stirnflächen die jeweils gewünschte Linsenform haben und an dessen äußerer Mantelfläche in der mittleren Querebene die Reflektoren vorgesehen sind.

Gemäß einem anderen Lösungsprinzip für einen op tischen Drehkoppler zur Übertragung von Lichtsignalen zwischen einem rotierenden senderseitigen Bauteil und einem stationären empfängerseitigen Bauteil sind eine Reihe von Umlenkspiegeln dem senderseitigen Bauteil mitlaufende ebene Umlenkspiegel zugeordnet. Am ortsfesten Bauteil sind in entsprechender Anzahl weitere Umlenkspiegel und radial außerhalb mehrere kugelsegmentförmige Hohlspiegel befestigt. Eine elektrooptische Einrichtung verteilt die impulsförmigen Lichtsignale auf die Empfänger-Lichtwellenleiter entsprechend der Rotationsbewegung des umlaufenden Bauteils. Die optische Mittelebene der beiden Serien von Umlenkspiegeln und die optische Achse des Hohlspiegels verlaufen durch die gemeinsame Drehachse. Auch diese Ausführung ermöglicht die Übertragung von impulsförmigen Lichtsignalen zwischen eingangsseitigen und ausgangsseitigen Lichtwellenleitern, deren Anschlüsse auf einem Ring angeordnet sind, wobei der innere zentrale Raum für den Durchgang eines anderen Bauteils, z. B. einer Welle, frei bleibt.

Im folgenden werden bevorzugte Ausführungsbeispiele der Erfindung anhand der Zeichnung im einzelnen beschrieben. Es zeigen:

Fig. I das Funktionsprinzip einer ersten Lösung anhand einer durchgehenden zylindrischen Ringlinse im Längsschnitt und in Vorderansicht;

Fig. 2 schematisch das gleiche Funktionsprinzip anhand von zwei Ringlinsen im Längsschnitt;

Fig. 3 einen nach dem Funktionsprinzip der Fig. I, 2 arbeitenden optischen Drehkoppler im Längsschnitt;

Fig. 4 schematisch ein anderes Funktionsprinzip eines optischen Drehkopplers im Querschnitt;

Fig. 5 einen Teil-Längsschnitt der Anordnung nach Fig. 4.

In den Fig. I, 2 ist das Funktionsprinzip einer ersten erfindungsgemäßen Lösung in zwei Varianten schematisch dargestellt. Bei der Ausführung nach Fig. I bildet eine durchgehende zylindrische Ringlinse I mit Reflektoren 2, 3 das Kernstück des optischen Übertragungssystems zwischen ortsfesten Lichtleitern 4, 5 und zusammen mit einem - nicht dargestellten -rotierenden Bauteil umlaufenden Lichtleitern 6, 7, denen ortsfeste bzw. umlaufende Sammellinsen 8 zugeordnet sind. Die Lichtleiter 4 bis 7 aus z. B. Glasfasern bzw. Faserbündeln sind mit ihren Enden kranzförmig angeordnet, wobei jeder Lichtleiter einen gesonderten Übertragungskanal darstellt. Die Ringlinse I ist in einer Trennebene T längsgeteilt und besteht somit aus zwei fest miteinander verbundenen halbringförmigen Zylinderhälften 9, 10. Gemäß der Erfindung haben die Stirnflächen 11, 12 und 13, 14 jeder Zylinderhälfte eine dreidimensional gewölbte Form von besonderer Konfiguration, so daß jede Stirnfläche die optische Funktion einer Sammellinse hat, deren Brennpunkte $f_1$, $f'_1$, $f_2$, $f'_2$ der beiden Sammellinsen-Stirnflächen 11, 12 bzw. 13, 14 je der Zylinderhälfte 9 bzw. 10 in der geometrischen Mittelebene M auf der Mantelfläche der jeweiligen Zylinderhälfte 9, 10 in jeweils einem Punkt zusammenfallen. Diese gemeinsamen Brennpunkte $f_1$, $f'_1$ bzw. $f_2$, $f'_2$ sind um 90° zur axialen Trennebene T versetzt und liegen somit diametral gegenüber. In jedem der beiden Brennpunktpaare $f_1$, $f'_1$ bzw. $f_2$, $f'_2$ befindet sich je einer der Reflektoren 2 bzw. 3. Die Ringzylinderlinse 1 kann aus Glas oder einem geeigneten optischen Kunststoff bestehen.

Wenn beispielsweise Lichtimpulse von den ortsfesten Lichtleitern 4, 5 zu den um die Mittelachse umlaufenden Lichtleitern 6, 7 übertragen werden sollen, wird die Ringlinse 1 mit der halben Drehzahl der umlaufenden Lichtleiter 6, 7 angetrieben. Die aus den beiden Sender-Lichtleitern 4, 5 austretenden Lichtstrahlen werden von den senderseitigen Sammellinsen 8 parallelgerichtet und in dem dargestellten Zustand durch die Stirnfläche 13 der Zylinderhälfte 10 nach radial außen und gleichzeitig in Umfangsrichtung zum gemeinsamen Brennpunkt $f_2$, $f'_2$ abgelenkt. Da in diesem Brennpunkt der Reflektor 2 angeordnet ist, werden die Lichtstrahlen um gleiche Winkelbeträge nach radial innen und in gleichbleibender Umfangsrichtung zur Empfängerseite hin reflektiert. An der ausgangsseitigen Stirnfläche 14 werden die Lichtstrahlen wieder parallelisiert und gelangen nach Durchgang durch die Sammellinse 8 zum umlaufenden Empfänger-Lichtleiter 6.

Die Drehung der Ringlinse 1 mit der halben Drehzahl der umlaufenden Empfänger-Lichtleiter 6, 7 bewirkt zusammen mit der Ablenkung an den Stirnflächen und der Reflexion der Lichtstrahlen in Umfangsrichtung, daß die von einem Sender-Lichtleiter ausgehenden Lichtstrahlen kontinuierlich dem zugeordneten umlaufenden Empfänger-Lichtleiter folgen und nur von diesem aufgenommen werden. Dabei hat die Längsteilung der Ringlinse 1 in zwei oder mehrere Zylinderhälften bzw. Zylindersegmente eine wichtige Funktion, weil beim Durchgang der optischen Trennebene T durch den Strahlengang eines Sender-Lichtleiters eine Teilung des Lichtstrahls erfolgt, wobei der eine Teil über die bisher wirksame Zylinderhälfte und der andere Teil über die nächstfolgende Zylinderhälfte der Ringlinse 1 übertragen und an deren ausgangsseitiger Stirnfläche wieder zusammengeführt sowie anschließend parallelgerichtet wird. Auf diese Weise folgt der Lichtstrahl z. B. eines ortsfesten Sender-Lichtleiters 4 bzw. 5 dem ihm zugeordneten umlaufenden Empfänger-Lichtleiter 6, 7 kontinuierlich, wobei die Lichtstrahlen aufgrund der besonderen Stirnflächenwölbung der Zylinderhälften 9, 10 in sich ändernden Teilen "umspringen", wenn eine Trennfläche in den Lichtstrahl eines Sender-Lichtleiters gelangt.

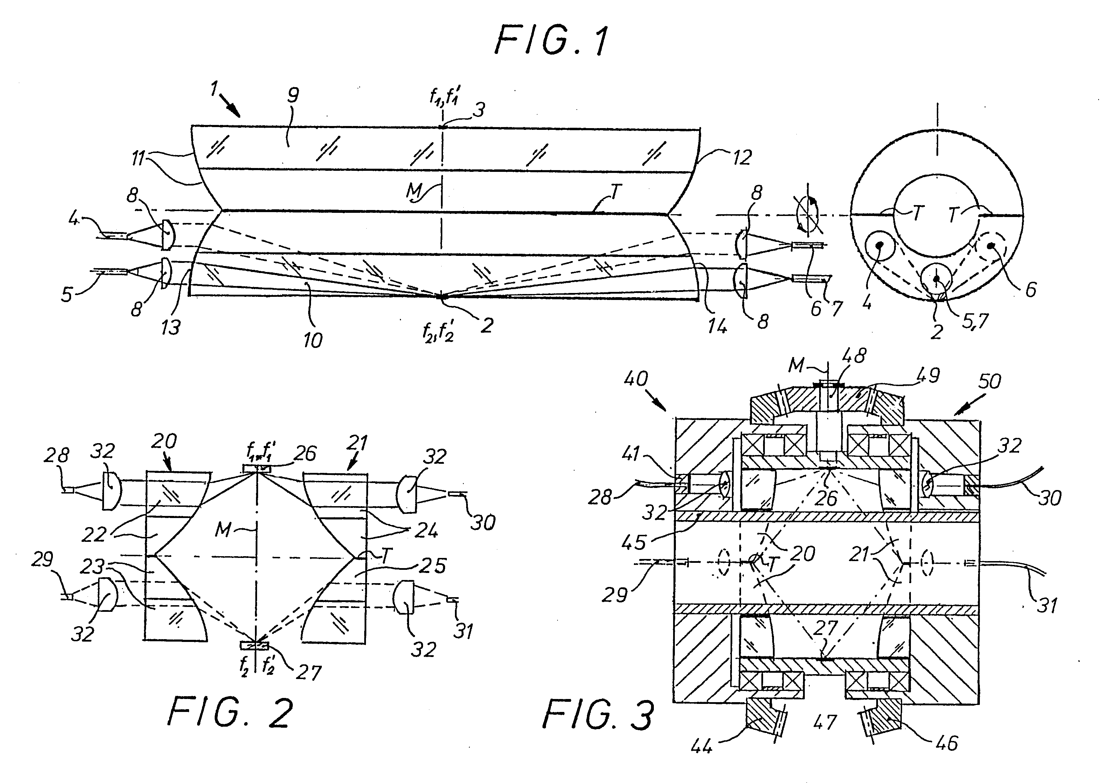

Das in Fig. 2 schematisch dargestellte System funktioniert nach dem gleichen optischen Prinzip wie das vorstehend beschriebene System nach Fig. 1. Statt einer durchgehenden Ringlinse 1 werden hier jedoch zwei Ringlinsen 20, 21 mit äußeren Planflächen verwendet. Jede Ringlinse 20 und 21 ist in ei ner gemeinsamen Trennebene T in je zwei Ringhälften 22, 23 und 24, 25 längsgeteilt. Die innere Stirnfläche jeder Ringhälfte 22 bis 25 ist auf einen Brennpunkt $f_1$, $f'_1$, $f_2$, $f'_2$ zentriert gewölbt. Die Brennpunkte $f_1$, $f'_1$ und $f_2$, $f'_2$ der axial in Flucht gegenüberliegenden Ringhälften 22, 24 bzw. 23, 25 fallen auf einer gemeinsamen zylindrischen Hüll- oder Mantelfläche in einem Punkt zusammen, in dem je ein Reflektor 26 und 27 (Spiegel) angeordnet ist. Beide Reflektoren 26, 27 liegen in der geometrischen mittleren Querebene M diametral gegenüber. Die beiden längsgeteilten Ringlinsen 20, 21 und die beiden Reflektoren 26, 27 bilden eine gemeinsame Baugruppe, die mit der halben Relativgeschwindigkeit der ortsfesten und der umlaufenden Lichtleiter 28, 29 bzw. 30, 31 rotiert. Der Verlauf der Lichtstrahlen innerhalb des von den Sammellinsen 32, den Ringlinsen 20, 21 und den Reflektoren bzw. Spiegeln 26, 27 gebildeten optischen Übertragungssystems entspricht -wie aus Fig. 2 ersichtlich -dem Strahlengang des vorstehend beschriebenen Systems gemäß Fig. 1.

Der in Fig. 3 dargestellte optische Drehkoppler arbeitet nach dem Funktionsprinzip gemäß Fig. 2. Einander entsprechende Bauteile sind daher mit den gleichen Bezugszeichen versehen. In einem in Fig. 3 linken Ringkörper 40 sind mehrere Anschlußbuchsen 41 ringförmig unter gleichen Abständen montiert, in denen je ein Ende eines Lichtleiters 28, 29 befestigt ist. Der Ringkörper 40 kann mit einem ortsfesten Bauteil verbunden sein oder um die Mittelachse rotieren. In einem vorgegebenen Abstand oder auch unmittelbar am Ende jedes Lichtleiters sind die Sammellinsen 32 im Ringkörper 40 oder in der Anschlußbuchse 41 angeordnet, um die Lichtstrahlen parallel auszurichten. Am inneren Endteil des hohlzylindrischen Ringkörpers 40 ist ein Kegelzahnkranz 44 sowie in seinem Inneren ein Auskleidungsrohr 45 starr befestigt. Auf der in Fig. 3 rechten Seite ist ein weiterer Ringkörper 50 vorgesehen, der konstruktiv dem linken Ringkörper 40 entspricht, jedoch gegenüber dem Auskleidungsrohr 45 verdrehbar ist und an seinem inneren Endteil ebenfalls einen äußeren Kegelzahnkranz 46 trägt. In beiden Ringkörpern 40, 50 ist ein Rotor 47 drehbar gelagert, in dem die beiden längsgeteilten Ringlinsen 20, 2I und an seiner inneren Umfangsfläche die beiden Spiegel 26, 27 fest montiert sind. Auf einem radialen Wellenzapfen 48 ist ein Kegelrad 49 gelagert, das mit den beiden Kegelzahnkränzen 44 und 46 ständig in Eingriff steht und zusammen mit diesen ein Differentialgetriebe bildet, welches den Rotor 47 mit genau der halben Drehgeschwindigkeit der relativen Drehgeschwindigkeit der beiden Ringkörper 40 und 50 antreibt.

Im Normalfall ist einer der beiden Ringkörper 40 bzw. 50 an einem ortsfesten Bauteil und der andere an einem rotierenden Bauteil, z. B. an einer den freien Innenraum des Drehkörpers durchragenden Welle, montiert, wobei die Sender-oder die Empfänger-Lichtleiter dem ortsfesten oder dem rotierenden Ringkörper zugehören können. Es ist jedoch auch möglich, daß beide Ringkörper 40 und 50 gegensinnig rotieren. Durch die Wir kung des Differentialgetriebes 44, 46, 49 vollzieht sich eine von den Drehbewegungen der beiden Ringkörper 40, 50 abgeleitete Rotordrehung mit der halben Differenzgeschwindigkeit.

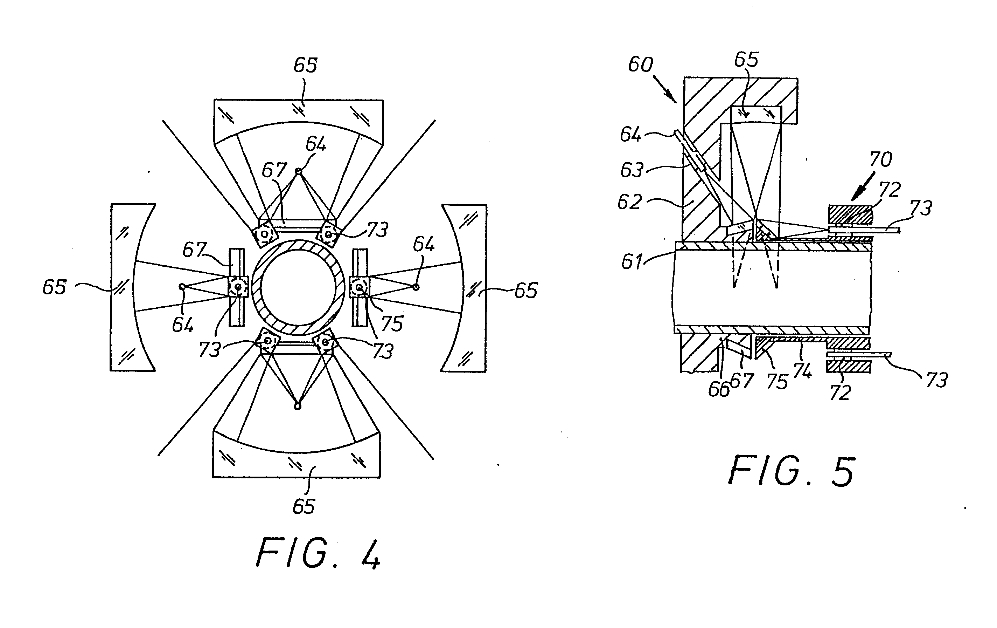

Der in den Fig. 4 und 5 dargestellte optische Drehkoppler gemäß der Erfindung enthält einen ortsfesten Ringkörper 60, in dessen zentraler Öffnung ein Auskleidungsrohr 6I für den Durchgang beispielsweise einer Welle unlösbar befestigt ist. In der Stirnwand 62 des Ringkörpers 60 sind in gleichen Winkelabständen mehrere Bohrungen 62 vorgesehen, deren Achse unter einem vorbestimmten Winkel zur Längsachse des Drehkopplers geneigt ist und in denen je eine Anschlußbuchse 63 für einen Lichtleiter 64 montiert ist. An einem radial äußeren Ringflansch 64 des Ringkörpers 60 sind mehrere Kugelsegmentspiegel 65 um jeweils 90° gegeneinander versetzt montiert (vgl. Fig. 4) und an einem radial inneren Ansatz 66 sind in gleicher Anzahl und Winkelanordnung mehrere Planspiegel 67 befestigt. In einem rotierenden Ringkörper 70 sind in mehreren achsparallelen Bohrungen 7I Anschlußbuchsen 72 für Lichtleiter 73 angeordnet. Am vorderen Ende einer stirnseitig am Ringkörper 70 befestigten Hülse 74 sind (Konvex-bzw.) Planspiegel 75 in einer den Planspiegeln 67 entsprechenden Anzahl und in gleicher Winkelversetzung angeordnet, die zusammen mit dem Ringkörper 70 rotieren.

Bei dieser Ausführung werden die Lichtsignale von den umlaufenden Lichtleitern 73 als Sender auf die stationären Lichtleiter 64 als Empfänger übertragen. Die Anordnung und Form der Hohlspiegel 65 ist so gewählt, daß ihre Krümmungsmittelpunkte auf der Drehachse liegen. Die senderseitigen Umlenkspiegel 75 reflektieren die von den umlaufenden Lichtwellenleitern 73 ausgesendeten Lichtstrahlen in der dargestellten Weise nach radial außen auf die ortsfesten Hohlspiegel 65, von denen sie in Richtung auf die ortsfesten Umlenkspiegel 67 reflektiert und von diesen in Richtung auf die Empfänger-Lichtleiter 64 zurückgeworfen werden. Wesentlich dabei ist, daß der Abstand der Enden der Sender-Lichtleiter 73 und der Empfänger-Lichtleiter 64 zu den ihnen zugeordneten Umlenkspiegeln 75 bzw. 67 gleich dem Abstand der jeweiligen Umlenkspiegel 75, 67 zur Mittelachse ist, was optisch bedeutet, daß die Enden der Lichtleiter 73 bzw. 64 in den -ausgespiegelten -Krümmungsmittelpunkten der Hohlspiegel 65 liegen.

Wie aus Fig. 4 hervorgeht, ist die Anzahl der Sender-Lichtwellenleiter 73 um mindestens I größer als diejenige der Empfänger-Lichtleiter 64. Alle senderseitigen Lichtleiter werden mit dem gleichen Meßsignal versorgt, was eine kontinuierliche Umschaltung der Lichtimpulse auf die sechs Sender-Lichtleiter erfordert, so daß jeder der vier Empfänger-Lichtleiter über die vier Kugelspiegel nur einen Meßwert erhält. Durch die größere Anzahl der Sender-Lichtleiter 73 gegenüber der Anzahl der Kugel-Hohlspiegel 65 und der Empfänger-Lichtleiter 64 wird erreicht, daß in jedem Moment jeweils ein Empfänger-Lichtleiter das volle Lichtsignal eines Sender-Lichtleiters erhält. Wie aus Fig. 4 ersichtlich, werden durch eine -nicht dargestellte -Logikschaltung die senderseitigen Lichtimpulse auf die Lichtleiter 73 so verteilt, daß ein Lichtsignal gleichzeitig zwei Sender-Lichtleitern 73 zugeführt wird, wenn die von den Umlenkspiegeln 75 reflektierten Lichtstrahlen in den Wirkungsbereich eines Hohlspiegeln einlaufen bzw. aus diesem auslaufen. Durch diese Maßnahme summieren sich die jeweils vom betreffenden Hohlspiegel an seinen beiden Endabschnitten nur teilweise erfaßten Lichtstrahlen wieder zu dem kompletten Lichtstrahl, so daß dieser mit voller Intensität zum Empfänger-Lichtleiter übertragen wird.

Die Erfindung ist nicht auf die dargestellten Ausführungen beschränkt. So kann beispielsweise bei dem System nach Fig. I bis 4 die Ringzylinderlinse I bzw. die Ringlinsen 20, 2I) aus einer Vielzahl von Zylindersegmenten mit einer entsprechenden Anzahl von Reflektoren bestehen, wobei jeweils zwei in axialer Flucht angeordnete Segmente ein eigenständiges Linsenpaar bilden, wobei der Reflektor in den beiden zusammenfallenden Brennpunkten jedes Linsenpaars angeordnet ist. Dieser Reflektor muß nicht notwendigerweise ein gesonderter Spiegel sein, sondern er kann auch allein durch die Außenfläche z. B. der Ringlinse gebildet werden, wenn an dieser aufgrund der geringen Einfall-und Ausfallwinkel Totalreflexion erfolgt. Die Aufteilung in eine Vielzahl von Zylinder-bzw. Ring-Segmenten empfiehlt sich in der Regel dann, wenn der freie Innenraum relativ große Durchmesser haben soll. Bei einer derartigen Ausführung ist die Ver wendung einer Logikschaltung zur Aufteilung der sender-bzw. empfängerseitigen Lichtimpulse in einer der Drehzahl des umlaufenden Bauteils entsprechenden Taktfolge angebracht.

**Ansprüche**

1. Optischer Drehkoppler zur Mehrkanal-Übertragung von Lichtsignalen zwischen zwei relativ zueinander um eine gemeinsame Achse rotierenden Bauteilen, denen jeweils mehrere außermittig angeordnete Lichtwellenleiter-Anschlüsse zugeordnet sind und zwischen denen ein optisches Übertragungssystem vorgesehen ist, das mindestens einen außermittig angeordneten Reflektor enthält, welcher mit einer zur Relativbewegung der beiden Bauteile proportionalen Drehzahl um die gemeinsame Achse rotiert,

**dadurch gekennzeichnet,**

daß das optische Übertragungssystem die aus den Sender-Lichtwellenleitern (4, 5; 73) austretenden Lichtsignale nach radial außen umlenkt, dort mittels des jeweiligen Reflektors (2, 3; 65) reflektiert und nach erneuter Umlenkung den Empfänger-Lichtwellenleitern (6, 7; 64) zuführt.

2. Optischer Drehkoppler nach Anspruch I,

dadurch gekennzeichnet,

daß das optische Übertragungssystem eingangsseitig und ausgangsseitig je eine ringförmige Linse - (11 bis 14; 20, 2l) aufweist, die mit der halben Relativdrehzahl der beiden Bauteile synchron umlaufen,

daß jede ringförmige Linse durch längsverlaufende Trennflächen (T) in mehrere gesonderte Segmentlinsen (9, l0; 22 bis 25) unterteilt ist, wobei jede eingangsseitige Segmentlinse (II, I3; 22, 23) in Flucht mit einer ausgangsseitigen Segmentlinse (I2, I4; 24, 25) angeordnet ist und jede Segmentlinse einen eigenen Brennpunkt ($f_1$, $f'_1$; $f_2$, $f'_2$) auf einer äußeren Hüllfläche aufweist, und

daß die Brennpunkte ($f_1$, $f_2$) der eingangsseitigen Segmentlinsen und die Brennpunkte ($f'_1$, $f'_2$) der zu ihnen in Flucht angeordneten ausgangsseitigen Segmentlinsen (I2, I4 bzw. 24, 25) in jeweils einem Punkt auf einer äußeren Hüllfläche zusammenfallen, in dem für jedes Segmentlinsen-Paar ein Reflektor (2, 3; 26, 27) angeordnet ist.

3. Optischer Drehkoppler nach Anspruch 2,

dadurch gekennzeichnet,

daß zwei in mehrere Segmente längsgeteilte Ringlinsen (20, 2l) mit planer Außenfläche in vorgegebenem Abstand zueinander angeordnet sind, wobei die zueinander weisenden Innenflächen jedes Ringsegments (22 bis 25) dreidimensional gewölbt ist und daß in den zusammenfallenden Brennpunkten jeder der in Flucht hintereinander angeordneten Linsensegmente je einer der Reflektoren (26, 27) angeordnet ist.

4. Optischer Drehkoppler nach Anspruch 2,

dadurch gekennzeichnet,

daß die zylindrische Ringlinse (I) aus einem längsgeteilten durchgehenden Glas-bzw. Kunststoffkörper besteht, an deren Außenfläche in der mittleren Querebene die Reflektoren (2, 3) angeordnet sind.

5. Optischer Drehkoppler zur Mehrkanal-Übertragung von Lichtsignalen zwischen zwei relativ zueinander um eine gemeinsame Achse rotierenden Bauteilen, denen jeweils mehrere außermittig angeordnete Lichtleiter-Anschlüsse zugeordnet sind und zwischen denen ein optisches Übertragungssystem vorgesehen ist, das einen außermittig angeordneten Reflektor enthält, der mit einer zur Relativbewegung der beiden Bauteile proportionalen Drehzahl um die gemeinsame Achse rotiert,

**dadurch gekennzeichnet ,**

daß jedem ortsfesten Lichtleiter (64) ein Umlenkspiegel (67) und ein radial äußerer Hohlspiegel - (65) ortsfest zugeordnet sind, wobei die Bildebenen der Hohlspiegel (65) in der Drehachse liegen,

daß jedem umlaufenden Lichtleiter (73) je ein weiterer, ebenfalls umlaufender Umlenkspiegel (75) zugeordnet ist und

daß mindestens eine elektrooptische Logik-Einrichtung zur taktweisen Verteilung der impulsförmigen Lichtsignale auf ein oder mehrere Sender-Lichtleiter (73) entsprechend ihrer Umlaufbewegung vorgesehen ist.

6. Drehkoppler nach Anspruch 5,

dadurch gekennzeichnet,

daß die Hohlspiegel (65) Kugelsegmentspiegel sind, deren Krümmungsmittelpunkt auf der gemeinsamen Mittelachse liegt.

7. Drehkoppler nach Anspruch 5 oder 6,

dadurch gekennzeichnet,

daß die Umlenkspiegel (67, 75) Planspiegel sind, die unter einem solchen Winkel zur Längsachse und zu den sender-bzw. empfängerseitigen Lichtleitern angeordnet sind, daß sich die ausgespiegelten Brennpunkte des Hohlspiegels genau an den Enden der Lichtleiter (64, 73) befinden.

8. Drehkoppler nach Anspruch 5 oder 6,

dadurch gekennzeichnet,

daß die Umlenkspiegel (75) konvexe Spiegel sind, die den außeraxialen Astigmatismus des Kugelsegmentspiegels (65) kompensieren.

FIG. 1

FIG. 2

FIG. 3

0 218 739

FIG. 5

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 496 281 (KOKUSAI DENSHIN DENWA CO., LTD.)<br>* Seite 7, Zeile 22 - Seite 8, Zeile 30; Abbildungen 7-9 * | 1 | G 02 B 6/36 |
| A | | 5 | |
| A,D | WO-A-8 002 750 (HOLLANDSE SIGNAALAPPARATEN B.V.)<br>* Seite 2, Zeile 30 - Seite 4, Zeile 16; Abbildungen 1-3 * | 1-3 | |
| A | WO-A-8 403 951 (A.M. MUMZHIU)<br>* Seite 2, Zeile 23 - Seite 3, Zeile 24; Abbildung 1 * | 1,5 | |
| P,A<br>D | DE-A-3 411 121 (SCHLEIFRING UND APPARATEBAU GmbH)<br>* Zusammenfassung; Seite 11, Zeile 12 - Seite 13, Zeile 2; Abbildungen 1-4 * | 1-5 | RECHERCHIERTE SACHGEBIETE (Int. Cl.4)<br><br>G 02 B |
| A | US-A-4 109 998 (M.L. IVERSON) | | |
| A,D | EP-A-0 065 351 (I.D.M. ELECTRONICS LTD.) | | |

Der vorliegende Recherchenbericht wurde für alle Patentansprüche erstellt.

| Recherchenort<br>DEN HAAG | Abschlußdatum der Recherche<br>12-06-1986 | Prüfer<br>MORRELL D.M. |
|---|---|---|